# EUROPEAN PATENT APPLICATION

(11) **EP 2 466 716 A2**
(43) Date of publication of application: **20.06.2012**
(21) Application number: 11181661.7
(22) Date of filing: 16.09.2011
(51) Int. Cl.: H02J 5/00

(54) **Non-contact power feeding apparatus**

(30) Priority: 20.12.2010 JP 2010282964
(71) Applicant: Showa Aircraft Industry Co., Ltd., Tokyo 196-0014 (JP)
(72) Inventor: Yamamoto, Kitao, Akishima-shi, Tokyo 196-0014 (JP); Sato, Takeshi, Akishima-shi, Tokyo 196-0014 (JP); Abe, Keisuke, Akishima-shi, Tokyo 196-0014 (JP); Mochizuki, Masashi, Akishima-shi, Tokyo 196-0014 (JP); Okiyoneda, Yasuyuki, Akishima-shi, Tokyo 196-0014 (JP)
(74) Representative: Piésold, Alexander James

(57) **Abstract**

In a non-contact power feeding apparatus 7 of the present invention, power is fed through an air gap G from a power transmission coil 8 of a power feeding side circuit 4 to a power receiving coil 9 of a power receiving side circuit 5, which are closely located to face each other, based on a mutual induction effect of electromagnetic induction. The power transmission coil 8 and the power receiving coil 9 are respectively composed of a planar assembly of a number of unit coils 8' and 9'. Each unit coil 8' (9') is formed in a spirally wound flat structure, wherein the direction of an electric current I is set in reverse to make the north and south magnetic poles reverse between each unit coil 8' (9') which is juxtaposed to another to directly come into line. As a result, the unit coils 8' (9'), which are juxtaposed to another to directly come into line, are provided in such a manner that an overlapping area of a respectively formed magnetic field H cancels another out to be offset.

## Description

### BACKGROUND OF THE INVENTION

### 1. Field of the Invention

The present invention relates to a non-contact power feeding apparatus, and more particularly to a non-contact power feeding apparatus adapted to feed power with no contact from, for example, a power feeding side of a ground surface side to a power receiving side of a vehicle side.

### 2. Technological background

A non-contact power feeding apparatus adapted to feed power from outside to, for example, a vehicle such as an electric vehicle without any mechanical contact such as a cable has been developed based on the demand and this apparatus is in practical use.

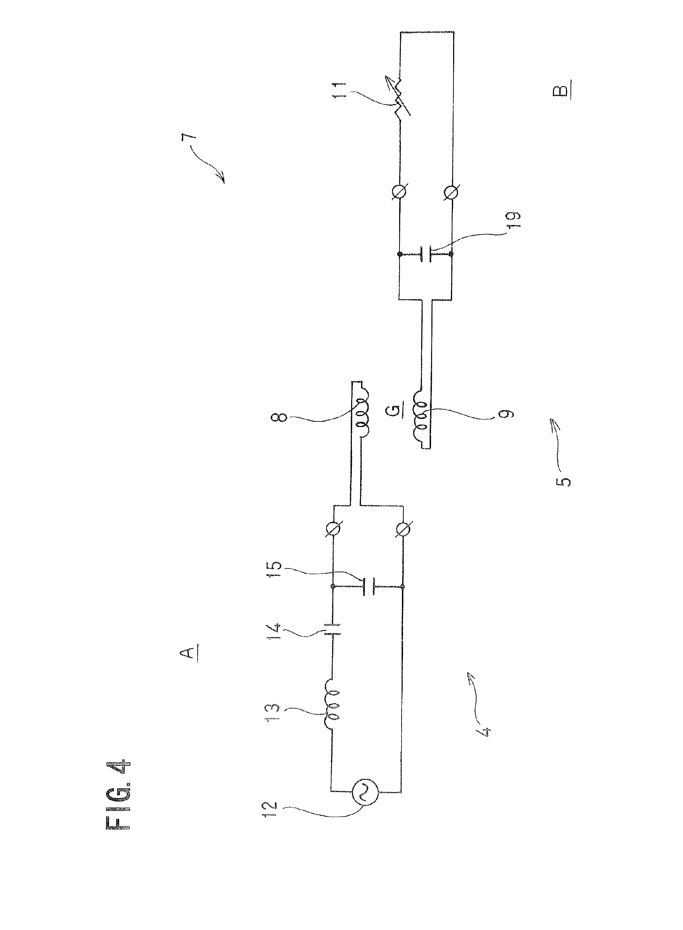

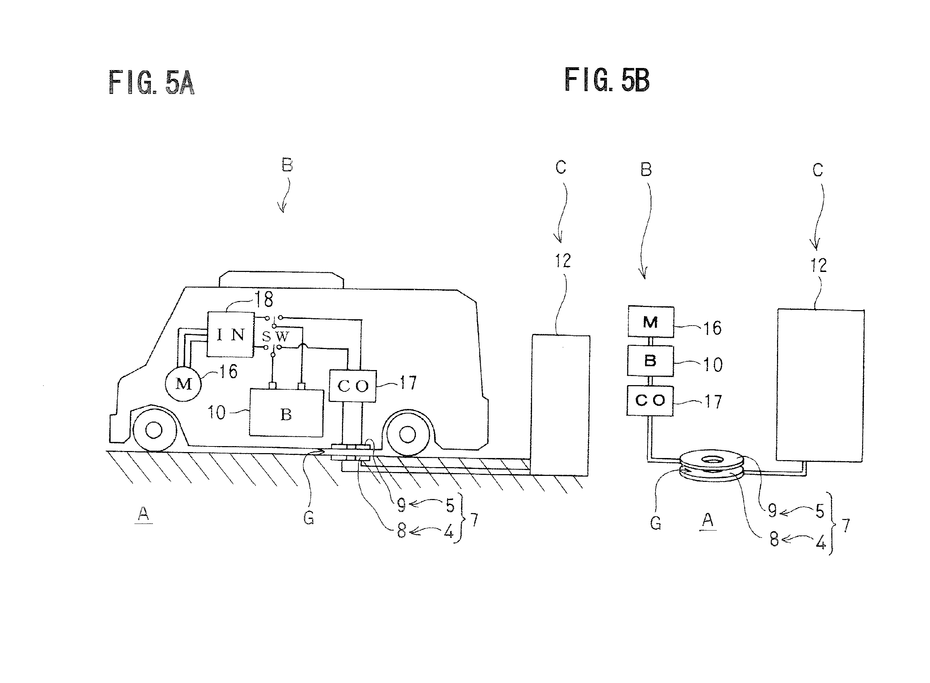

In such a non-contact power feeding apparatus, power is fed through an air gap of, for example, tens of millimeters to hundreds of millimeters from a power transmission coil of a power feeding side circuit fixedly disposed on the ground side to a power receiving coil of a power receiving side circuit mounted on the side of a movable body such as a vehicle, based on a mutual induction effect of electromagnetic induction (refer to Figs. 4 and 5 described below).

### 3. Description of the Prior Art

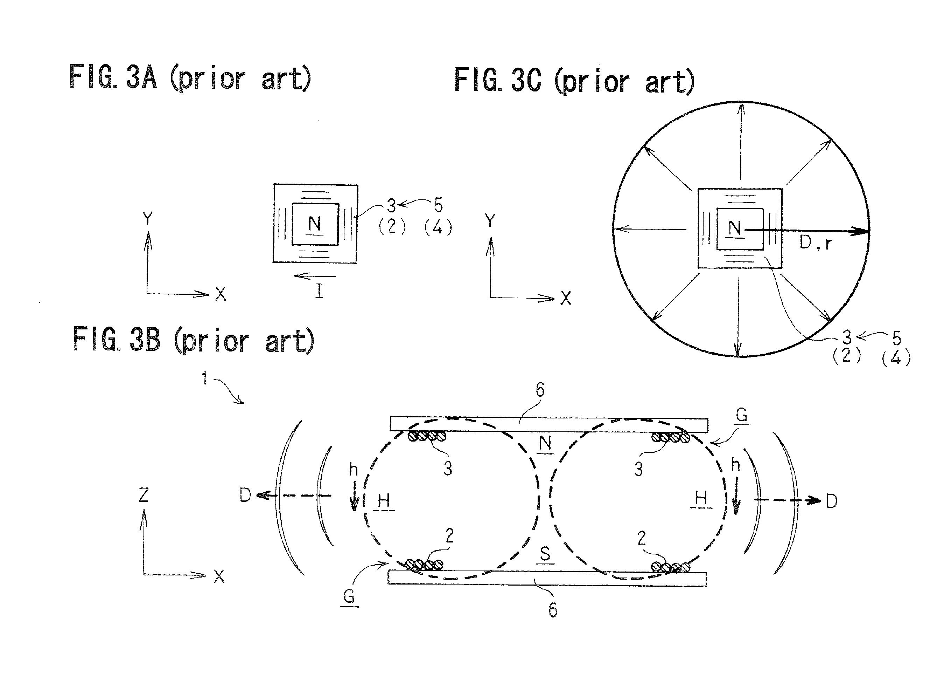

Fig. 3 shows a conventional non-contact power feeding apparatus 1 of this type, wherein Fig. 3A is a plan view of the power receiving coil 3 (the power transmission coil 2), Fig. 3B is a front view showing a condition of the electromagnetic field radiation etc., and Fig. 3C is a plan view showing the same condition as in Fig. 3B.

In such a non-contact power feeding apparatus 1 of this type, the power transmission coil 2 of the power feeding side circuit 4 and the power receiving coil 3 of the power receiving side circuit 5 have always been formed in a spirally wound flat structure, respectively. Further, in such a conventional example, the power transmission coil 2 and the power receiving coil 3 are respectively composed of one unit coil (that is, a 2-pole coil with 2 pole numbers composed of the north and south poles) to provide a 2-pole structure.

Reference numeral 6 in Fig. 3 is a magnetic core such as a ferrite core which is respectively disposed outside the power transmission coil 2 and the power receiving coil 3. Reference letter G is an air gap, H is an alternating magnetic field formed, h is one example of the direction of the magnetic field H, N is its north pole, S is its south pole, and I shows the direction of an electric current. D shows the electromagnetic field radiation and r shows the electromagnetic field strength.

### 4. Prior art documents

### (Patent Documents)

Such a conventional non-contact power feeding apparatus 1 of this type is disclosed, for example, in the following Patent Documents 1 and 2.
[Patent Document 1] Japanese Unexamined Patent Publication No. 2008-087733; and
[Patent Document 2] Japanese Unexamined Patent Publication No. 2010-035300

### 5. Problems to be solved by the Invention

### (Problems)

It has been pointed out that such a conventional non-contact power feeding apparatus 1 has the following problems.

As shown in Fig. 3B, in the case of power feeding, the power transmission coil 2 and the power receiving coil 3 are electromagnetically coupled by utilizing the induced magnetic field H to form a magnetic path of a magnetic flux, wherein non-contact power feeding is conducted (As shown in Fig. 3B as a typical example, the power receiving coil 3 and the power transmission coil 2 are vertically located and the problems will now be described based on the positional relationship).

In this case, a high-density, strong high-frequency magnetic field H is induced in the air gap G. However, since the magnetic core 6 is disposed outside in the vertical direction (i.e., in the Z direction), there is little electromagnetic field radiation D.

As opposed to this, since there is no interrupter in the lateral direction (i.e., in the X direction) and in the vertical direction (i.e., in the Y direction), the electromagnetic field radiation D is free to diffuse. In this manner, the electromagnetic field radiation D and the electromagnetic field strength r which are externally diffused to propagate in a substantially planar manner show the non-directional characteristics, that is, the isotropic characteristics as shown in Fig. 3C.

It has been pointed out that such electromagnetic field radiation D and the electromagnetic field strength r in the lateral and vertical directions may cause electromagnetic disturbance in the neighborhood. In other words, since the strong high-frequency magnetic field H (the alternating magnetic field H) is induced to strongly radiate high-frequency electromagnetic waves, it has been pointed out that the electromagnetic waves readily reach a neighboring area and may cause an adverse effect on the environment. For example, it has been pointed out that the high-frequency electromagnetic waves may generate electronic jamming or produce a functional disorder to the human body in the area of, for example, tens of meters to hundreds of meters away.

On the other hand, in the non-contact power feeding apparatus 1, there is a great need for expansion of the air gap G in view of the convenience of power feeding.

However, expansion of the air gap G is proportional to an increase in the exciting reactive power of the power transmission coil 2 and it is necessary to increase the exciting apparent power. In the end, the expansion of the air gap G results in the expansion of the electromagnetic field radiation D to the outside and the increase of the electromagnetic field strength r, thereby leading to the increase in risk of electromagnetic disturbance to the neighborhood as described above.

### SUMMARY OF THE INVENTION

### 1. Present Invention

In view of such a current situation, a non-contact power feeding apparatus of the present invention was developed to solve the problems of the conventional technology.

It is therefore an object of the present invention to provide an improved non-contact power feeding apparatus in which, first, the electromagnetic disturbance can be prevented, and, second, a large air gap can be realized.

### 2. Means for solving the problems

A technical means of the present invention is as follows as per claims 1~7.

### (Aspect 1)

A non-contact power feeding apparatus is provided, in which power is fed through an air gap, with no contact, from a power transmission coil of a power feeding side circuit to a power receiving coil of a power receiving side circuit, which are closely disposed to face each other, based on a mutual induction effect of electromagnetic induction.

In such a non-contact power feeding apparatus, the power transmission coil and the power receiving coil are respectively composed of a planar assembly of a number of unit coils. Each unit coil is formed in a spirally wound flat structure to be juxtaposed to another, wherein the direction of an electric current is set in reverse between each unit coil which is juxtaposed to the other to directly come into line.

Further, as described in the following aspects 2 through 7, the non-contact power feeding apparatus according to the present invention can be modified by adding technically limited elements.

### (Aspect 2)

In a preferred non-contact power feeding apparatus, power can be fed by a stop-type power feeding method whereby, in the case of power feeding, the power receiving coil is positioned in close proximity facing the stationary power transmission coil. The power transmission coil and the power receiving coil are formed in a vertically paired symmetric structure.

### (Aspect 3)

In a preferred non-contact power feeding apparatus, one unit coil is composed of paired north and south poles to be taken as a double-pole with 2 pole numbers. The power transmission coil and the power receiving coil are therefore respectively taken as a 4-pole structure, an 8-pole structure or a multi-pole structure when an even number of unit coils is assembled.

### (Aspect 4)

In a preferred non-contact power feeding apparatus, the direction of an electric current is set in reverse to make the north and south magnetic poles to be reversed between each unit coil which is juxtaposed to another to directly come into line.

### (Aspect 5)

In a preferred non-contact power feeding apparatus, the unit coils, which are juxtaposed to another to directly come into line, are provided in such a manner that an overlapping area of the respectively formed magnetic field cancels another area out to be offset based on the reverse north and south magnetic poles, thereby reducing the externally radiated electromagnetic waves in total.

### (Aspect 6)

In a preferred non-contact power feeding apparatus, the power transmission coil and the power receiving coil are respectively provided outside with a magnetic core such as a ferrite core of a flat structure.

### (Aspect 7)

In a preferred non-contact power feeding apparatus, the power feeding side circuit such as the power transmission coil is fixedly disposed on the ground side such as a ground surface, a road surface or a floor surface, while the power receiving side circuit such as the power receiving coil is mounted on the side of a vehicle or other movable body.

### 3. Operation etc.

Operation etc. of embodiments of the present invention will now be described in the following items (1) through (11).
(1) In the non-contact power feeding apparatus, power is fed by causing the power receiving coil to be closely located to face the power transmission coil through an air gap. The power feeding operation is typically conducted by a stop-type power feeding method.
(2) In the case of power feeding, the power transmission coil is energized to form a magnetic flux, wherein a magnetic path of the magnetic flux is formed in the air gap between the power transmission coil and the power receiving coil.
(3) By utilizing the magnetic field induced in this way, the non-contact power feeding is conducted from the power transmission coil to the power receiving coil based on the mutual induction effect of the electromagnetic induction.
(4) Incidentally, there is a risk in such a non-contact power feeding that the electromagnetic waves are strongly radiated to the outside.
(5) Referring to such a risk, since a magnetic core is disposed on the lateral surface (e.g., the lower surface) of the power transmission coil and on the lateral surface (e.g., the upper surface) of the power receiving coil, there is little radiation of electromagnetic waves in the same direction (e.g., in the upper and lower direction).
(6) However, since each side surface (e.g., the vertical surface and the lateral surface) of the air gap is open, there is a great risk that the electromagnetic waves are strongly radiated to the outside.
(7) According to the present invention, the power transmission coil and the power receiving coils are provided with, for example, a 4-pole structure, an 8-pole structure, or a multi-pole structure and the direction of an electric current is set in reverse to make the north and south magnetic poles reverse between each unit coil which is juxtaposed to the other to directly come into line.
(8) Accordingly, the unit coils which are juxtaposed to each other to directly come into line are provided to make the direction of an individually formed magnetic field reverse. An overlapping area of the magnetic field of which the direction is formed reverse cancels the other out to be offset and is weakened.
(9) In this manner, the electromagnetic waves radiated to the outside are drastically reduced in total based on an opposite phase.
(10) With this, since the risk of generating the electromagnetic disturbance is prevented, expansion of the air gap can be realized.
(11) The non-contact power feeding apparatus of the present invention has the following effects.

### 4. Effects of the Invention

### (First effect)

First, an electromagnetic disturbance can be prevented. In the non-contact power feeding apparatus of the present invention, the power transmission coil and the power receiving coil are provided with, for example, a 4-pole structure, an 8-pole structure or a multi-pole structure, and the direction of an electric current and the north and south poles are made in reverse between each unit coil which is juxtaposed to the other to directly come into line.

Since an overlapping area of the magnetic field respectively formed by the unit coil cancels another out and is weakened, the electromagnetic waves radiated to the outside are drastically reduced in total. In this manner, since the electromagnetic field radiation diffused to the outside to be spread is reduced and the electromagnetic field strength is lowered, a risk of causing the electromagnetic disturbance in the neighborhood can be prevented.

As in the conventional example of this type described above, the non-contact power feeding apparatus of the present invention can prevent a risk of generating electronic jamming or of producing a functional disorder to the human body in the area of, for example, tens of meters to hundreds of meters away.

### (Second effect)

Second, an air gap can be expanded. In the non-contact power feeding apparatus of the present invention, the electromagnetic waves radiated to the outside can be drastically reduced in total to prevent the possible electromagnetic disturbance.

As compared to the conventional example of this type described above, the non-contact power feeding apparatus of the present invention makes it possible to provide a larger air gap. Expansion of the air gap results in the increase of the exciting reactive power and the exciting apparent power, but the adverse effect can be covered (offset) by the first effect described above. In the non-contact power feeding apparatus, there is a great need for the expansion of air gap (i.e., realization of a large air gap) in view of the convenience of power feeding and it is possible to meet such a need.

As described above, the present invention has prominent effects in that all the problems of the conventional example of this kind can be solved by the first and second effects.

### BRIEF DESCRIPTION OF THE DRAWINGS

The above and other objects, features and advantages of the present invention will become more apparent from the following description when taken in conjunction with the accompanying drawings.

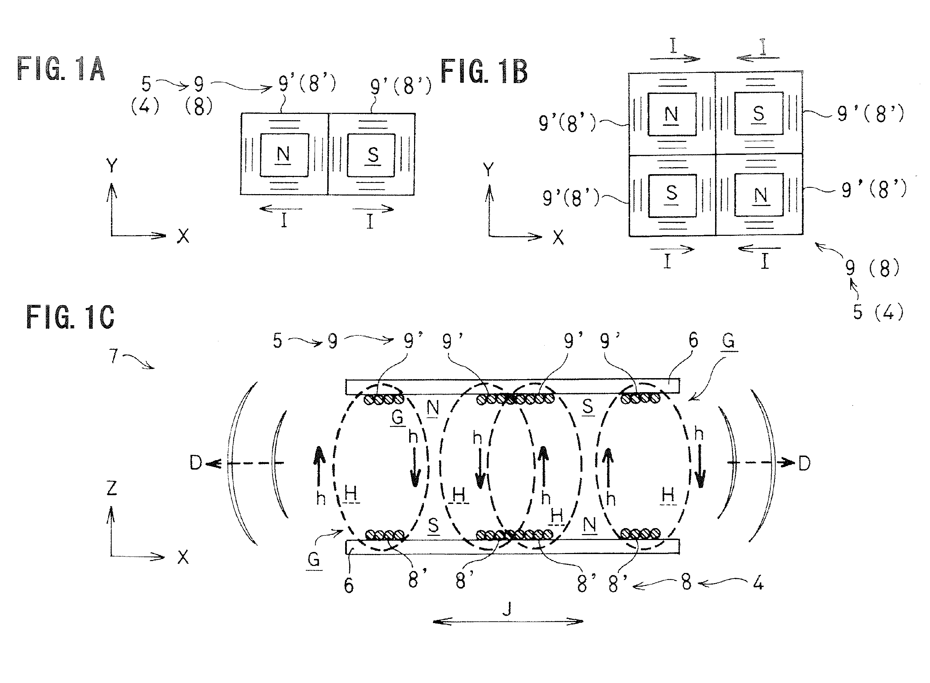

Fig. 1 is provided to explain an embodiment of a non-contact power feeding apparatus according to the present invention, wherein Fig. 1A is a plan view of a first example of a power receiving coil (a power transmission coil), Fig. 1B is a plan view of a second example of the power receiving coil (the power transmission coil), and Fig. 1C is a front view showing a condition of the electromagnetic field radiation etc. of the first example;

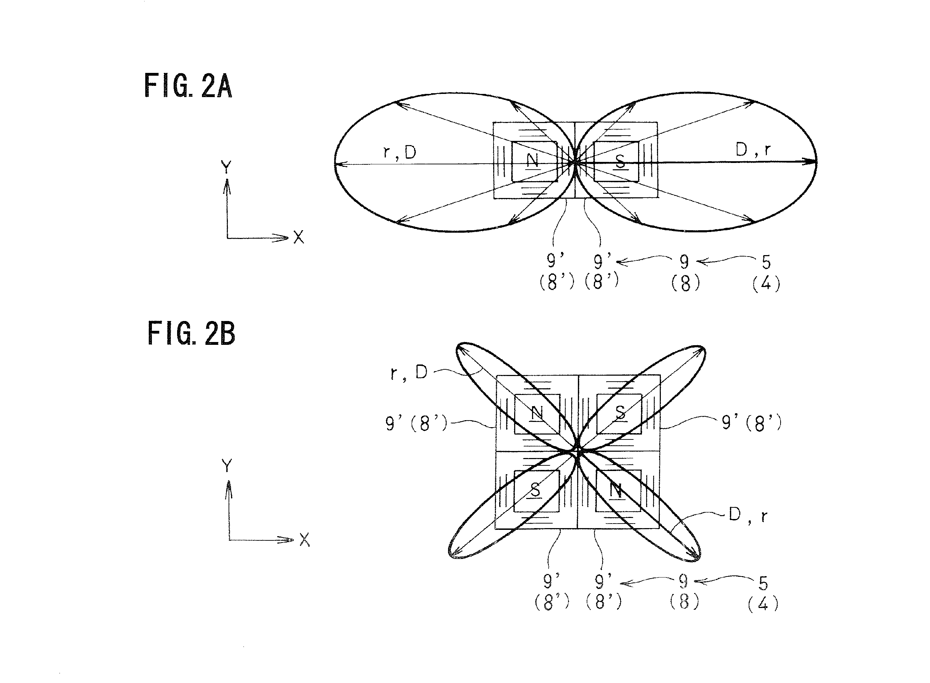

Fig. 2 is provided to explain an embodiment of the present invention, wherein Fig. 2A is a plan view showing a condition of the electromagnetic field radiation and the like of the first example and Fig. 2B is a plan view showing a condition of the electromagnetic field radiation of the second example;
Fig. 3 is provided to explain a conventional example of this type, wherein Fig. 3A is a plan view of a power receiving coil (a power transmission coil), Fig. 3B is a front view showing a condition of the electromagnetic field radiation and the like and Fig. 3C is a plan view showing a condition of the electromagnetic field radiation and the like;
Fig. 4 is a circuit diagram for generally explaining the non-contact power feeding apparatus; and
Fig. 5 is provided to generally explain the non-contact power feeding apparatus, wherein Fig. 5A is an overall side view and Fig. 5B is a configuration block diagram.

### DETAILED DESCRIPTION OF THE PREFERRED EMBODIMENTS

A preferred embodiment of the present invention will now be fully described hereunder, by way of example only.

### (Non-contact power feeding apparatus 7)

First, a non-contact power feeding apparatus 7 which becomes the premise of the present invention will now be generally described with reference to Figs. 4 and 5.

The non-contact power feeding apparatus 7 is provided in such a manner that electric power is fed through an air gap G, with no contact, from a power transmission coil 8 of a power feeding side circuit 4 to a power receiving coil 9 of a power receiving side circuit 5, which are closely located to face each other, based on a mutual induction effect of the electromagnetic induction. The power feeding side circuit 4 is fixedly disposed on the side of the ground A, while the power receiving side circuit 5 is mounted on the side of a movable body such as a vehicle B.

Such a non-contact power feeding apparatus 7 will be further described. First, the power feeding side circuit 4 on the power feeding side, the track side or the primary side is fixedly disposed on the side of a ground surface, a road surface, a floor surface or other ground A at a power feeding area such as a power feeding stand C.

As opposed to this, the power receiving side circuit 5 on the power receiving side, the pickup side or the secondary side is mounted on a vehicle B such as an electric vehicle or an electric train, or other movable body. The power receiving side circuit 5 is available not only for driving, but also for non-driving. As shown in Fig. 5, the power receiving side circuit 5 is usually connected to a car-mounted battery 10, but, as shown in Fig. 4, it can also be connected direct to various types of loads 11.

In the case of a power feeding operation, the power transmission coil 8 of the power feeding side circuit 4 and the power receiving coil 9 of the power receiving side circuit 5 are closely located to face each other with no contact through an air gap G which is a small space of, for example, 50mm to 150mm.

In the case of a power feeding operation, a stop-type power feeding method is typical whereby the power receiving coil 9 is positioned to face the stationary power transmission coil 8 from above. In the case of the stop-type power feeding method, the power transmission coil 8 and the power receiving coil 9 are formed in a vertically paired symmetric structure. However, it is also possible to adopt a mobile-type power feeding method whereby power feeding is conducted while the power receiving coil 9 runs at a low speed over the power transmission coil 8.

The power transmission coil 8 of the power feeding side circuit 4 is connected to a power source 12. The power source 12 is composed of an inverter for converting a frequency and the like which applies a high frequency alternating current of, for example, several kHz to tens of kHz, moreover, tens of kHz to hundreds of kHz, to the power transmission coil 8 as a power feeding alternating current, that is, an exciting current. In the power feeding side circuit 4 of Fig. 4, reference numeral 13 is a choke coil, 14 is a capacitor for series resonance with the power transmission coil 8, and 15 is a capacitor for parallel resonance with the power transmission coil 8.

The power receiving coil 9 of the power receiving side circuit 5 can be connected to the battery 10 in the example as shown in Fig. 5, wherein a running motor 16 is driven by the battery 10 charged by the power feeding operation. In the example of Fig. 4, power is fed to another load 11. Reference numeral 17 of Fig. 5 is a converter (a rectifying section and a smooth section) for converting an alternating current to a direct current and 18 is an inverter for converting the direct current to the alternating current. In the power receiving side circuit 5 of Fig. 4, reference numeral 19 is a capacitor for parallel resonance with the power receiving coil 9.

The power transmission coil 8 and the power receiving coil 9 are respectively formed in a spirally wound flat structure. In other words, the power transmission coil 8 and the power receiving coil 9 are provided in such a manner that each insulated coil conducting wire is spirally wound more than once in a circular or rectangular shape while maintaining the parallel positional relationship juxtaposed on the same plane. In this manner, the power transmission coil 8 and the power receiving coil 9 are respectively formed in a thin, flat structure of a circular or substantially flange shape as a whole.

As shown in Figs. 1C and 3B, the power transmission coil 8 and the power receiving coil 9 are respectively provided outside with a magnetic core 6 such as a ferrite core of a flat structure. The magnetic core 6 is made of a ferromagnetic body of a flat, circular or substantially flange shape and is concentrically disposed with and has a larger surface area than the power transmission coil 8 and the power receiving coil 9. The magnetic core 6 increases the inductance between coils to strengthen the electromagnetic coupling and induces, collects and directs the formed magnetic flux.

Next, a mutual induction effect of electromagnetic induction will be described. It is publicly known and used in practice in the non-contact power feeding apparatus 7 that, in the case of power feeding operation, the power transmission coil 8 and the power receiving coil 9 are closely located to face each other and a magnetic flux is formed in the power transmission coil 8 to generate induced electromotive force in the power receiving coil 9, wherein electric power is fed from the power transmission coil 8 to the power receiving coil 9.

In other words, as shown in Fig. 1C, the self-induced electromotive force is caused to generate by applying a power feeding alternating current, that is, an exciting current to the power transmission coil 8 of the power feeding side circuit 4 from the power source 12 to generate a magnetic field H around the power transmission coil 8, thereby forming a magnetic flux in the direction perpendicular to the coil surface.

The magnetic flux formed in this way goes through and interlinks the power receiving coil 9 of the power receiving side circuit 5 to generate the induced electromotive force, thereby forming the magnetic field H. In this manner, the electric power is sent and received utilizing the induced magnetic field H. As a result, power of 1 kW to several kW, moreover, tens of kW to hundreds of kW can be fed.

In the non-contact power feeding apparatus 7, based on such a mutual induction effect of electromagnetic induction, a magnetic path of a magnetic flux is formed to provide electromagnetic coupling between the power transmission coil 8 and the power receiving coil 9, wherein the non-conduct power feeding is transmitted.

The general description of the non-contact power feeding apparatus 7 is as above.

### (Outline of preferred embodiments of the present invention)

A non-contact power feeding apparatus 7 of embodiments of the present invention will now be described with reference to Figs. 1 and 2. First, an outline of the present invention is as follows.

In the non-contact power feeding apparatus 7 of the present invention, the power transmission coil 8 is composed of a planar assembly of a number of unit coils 8'. The power receiving coil 9 is also composed of a planar assembly of a number of unit coils 9'.

Each unit coil 8' of the power transmission coil 8 is juxtaposed to each other and the direction of an electric current I is reversed to make the north and south magnetic poles reverse between each unit coil 8' which is juxtaposed to another to directly come into line. Likewise, each unit coil 9' of the power receiving coil 9 is also juxtaposed to another and the direction of the electric current I is set in reverse to make the north and south magnetic poles reverse between each unit coil 9' which is juxtaposed to another to directly come into line.

The unit coils 8' (9') which are juxtaposed to each other to directly come into line are provided in such a manner that an overlapping area of each magnetic field H cancels another out to be offset based on the reverse north and south magnetic poles and as a result, the electromagnetic waves radiated to the outside are reduced in total.

The outline of the preferred embodiments of the present invention is as described above. The preferred embodiments of the present invention will now be fully described hereunder.

### (Coil arrangements)

First, the power transmission coil 8 (the power receiving coil 9) is composed of a planar assembly of a number of unit coils 8' (9'), wherein a number of unit coils 8' (9') is juxtaposed one to another.

In the first example of Fig. 1A, two unit coils 8' (9') are used and in the second example of Fig. 1B, four unit coils 8' (9') are used. In this manner, an example with an even number of unit coils 8' (9') such as 2 unit coils, 4 unit coils or 8 unit coils is typical, but an example with an odd number of unit coils more than 3 is also available.

In this manner, a number of unit coils 8' (9') is juxtaposed one to another. First, as typically shown in the first example of Fig. 1A and in the second example of Fig. 1B, there is a case where the unit coils 8' (9') are closely juxtaposed one to another. Unlike the examples as shown in Figs. 1A and 1B, there is a case where a space is provided between each unit coil 8' (9') or there may be a mixed case.

Further, as shown in the first example, there is a case where each unit coil 8' (9') is laterally disposed to form a line (in the X direction), but unlike this example, there is another case where each unit coil 8' (9') is vertically disposed to form a line (in the Y direction), or as in the second example, there is also a case where each unit coil 8' (9') is laterally and vertically disposed (in the X and Y directions).

Coil arrangements are as described above.

### (Direction of electric current I)

Each unit coil 8' (9') is juxtaposed to another. The direction of an electric current I is set in reverse between each unit coil 8' (9') which is juxtaposed to another to directly come into line.

In other words, in the first example of Fig. 1A, the direction of electric current I is made to reverse between two unit coil 8' (9') which are juxtaposed to each other to directly come into line in the lateral direction (in the X direction). In the second example of Fig. 1B, the direction of electric current I is set to reverse between each unit coil 8' (9') which is juxtaposed to another to directly come into line in the lateral direction (in the X direction) and in the vertical direction (in the Y direction). For example, unlike the diagonal or cater-cornered juxtaposed position relationship, the unit coils 8' (9') which are juxtaposed to another to directly come into line in the lateral and/or vertical direction are provided in such a manner that the direction of electric current I is set in reverse.

On the contrary, in the case of the unit coils 8' (9') which are, for example, in the diagonal or cater-cornered juxtaposed relationship, the direction of electric current I is same because the unit coils 8' (9') are juxtaposed to each other, but they do not directly come into line (refer to Fig. 1B).

In this manner, as a method of setting the direction of electric current I in reverse between the predetermined unit coils 8' (9'), it is a typical example that a series connection is made between each unit coil 8' (9') and the connection wiring between each unit coil 8' (9') is crossed on the way to make the coil wiring direction reverse between each unit coil 8' (9'). However, It is also possible to make each unit coil 8' (9') an opposite phase (without making the coil unit coordinate phase) and to make the coil winding direction the same.

The direction of electric current I is as described above.

### (Magnetic poles etc.)

In the case of each unit coil 8' (9') which is juxtaposed to another to directly come into line, since the direction of electric current I is set in reverse in this way, the magnetic poles, that is, the north and south poles are made to reverse between each unit coil 8' (9') (Ampere's right-handed screw rule).

In the first example of Fig. 1A, the magnetic poles of the magnetic field H induced based on the induced electromotive force are caused to reverse with respect to each other to provide the north and south magnetic poles between two unit coils 8' (9') which are juxtaposed to directly come into line in the lateral (X) direction. In the second example of Fig. 1B, the magnetic poles of the magnetic field H induced based on the induced electromotive force are provided in reverse to one other to provide the reverse north and south magnetic poles between each unit coil 8' (9') which is juxtaposed to another to directly come into line in the lateral (X) direction and in the vertical (Y) direction.

Meanwhile, each unit coil 8' forming the power transmission coil 8 and each unit coil 9' forming the power receiving coil 9 are closely located to face each other to be paired in the case of the power feeding operation. Thus, the paired north and south poles are formed between one unit coil 8' of the power transmission coil 8 and one unit coil 9' of the power receiving coil 9.

Further, one unit coil 8' of the power transmission coil 8 and one unit coil 9' of the power receiving coil 9 are respectively taken as a 2-pole coil with 2 pole numbers composed of the north and south poles.

The power transmission coil 8 and the power receiving coil 9 of this non-contact power feeding apparatus 7 are taken as a multi-pole coil structure with 4 poles or more by the power transmission coil 8 composed of an assembly of a number of the unit coils 8' and the power receiving coil 9 composed of an assembly of a number of the unit coils 9'. For example, the power transmission coil 8 (the power receiving coil 9) of the first example is taken as a 4-pole coil structure, while the power transmission coil 8 (the power receiving coil 9) of the second example is taken as an 8-pole coil structure (On the contrary, the power transmission coil 2 and the power receiving coil 3 according to the conventional example of this type as shown in Fig. 3 are respectively taken as a 2-pole coil structure).

The magnetic poles etc. are as described above.

### (Magnetic field)

Referring first to the power transmission coil 8 and the power receiving coil 9, the magnetic poles, that is, the north and south poles are reversed between each unit coil 8' (9') which is juxtaposed to the other to directly come into line as shown in Figs. 1A and 1B.

A number of magnetic fields H is formed for each unit coil 8' and 9' to be paired between each unit coil 8' of the power transmission coil 8 and each unit coil 9' of the power receiving coil 9.

In this manner, as shown in Fig. 1C, the magnetic fields H which are formed in line are provided in such a manner that the direction of magnetic field h which is juxtaposed in line is reversed. In other words, a high frequency magnetic field H (an alternating magnetic field H) induced in the air gap G is provided to reverse the direction of the magnetic field h.

In both magnetic fields H of which the direction h is made reverse and which are juxtaposed in line, an overlapping area partially cancels another out to be offset. In other words, in Fig. 1C, an individual magnetic field H formed by the paired unit coil 8' (9') is provided in such a manner that the direction of magnetic flux and the direction of magnetic field h are reversed in the clockwise or counterclockwise direction based on the setting of the reverse north and south magnetic poles between the unit coils 8' and 9' which are laterally juxtaposed to directly come into line. The overlapping area of the magnetic field H formed in this manner cancels the other out to be offset and is weakened based on a fact that the direction of magnetic field h is reversed.

The magnetic field H is as described above.

### (Electromagnetic field radiation D etc.)

Electromagnetic field radiation etc. will be described in the following items a), b) and c).
a) First, a magnetic core 6 is generally disposed outside the power transmission coil 8 and a magnetic core 6 is also disposed outside the power receiving coil 9. As also shown in Fig. 1C, there is little electromagnetic field radiation D and electromagnetic field strength r based on the formed magnetic field H in the vertical (Z) direction outside the magnetic core 6. This was the same result as in the conventional example of this type (refer to Fig. 3B).
b) As shown in the first example of Fig. 2A in the present invention, the electromagnetic field radiation D in the vertical (Y) direction is significantly reduced and the electromagnetic field strength r also comes down significantly. These almost get close to zero. This comes from the result whereby, based on the setting of the reverse north and south magnetic poles between the unit coils 8' (9') which are juxtaposed to each other to directly come into line, the direction of magnetic field h is reversed in each magnetic field H and partially overlapping areas between the adjacent magnetic fields H strongly cancel each other out to be offset and the magnetic field H is weakened.
c) As opposed to this, in the first example of Fig. 2A, the electromagnetic field radiation D in the lateral (X) direction is not significantly reduced and its reduction level remains moderate, while the electromagnetic field strength r is not significantly reduced and the lowering level also remains moderate. This moderation is based on the fact that the partially overlapping area is comparatively small and cancelling out is also small as compared to the case of item b) described above.

In this case, the smaller the distance J between the unit coils 8' (9') which are juxtaposed to directly come into line, the larger the overlapping area and the rate of reduction and lowering becomes larger. On the contrary, the larger the distance J, the smaller the overlapping area and the rate of reduction and lowering becomes smaller.

Meanwhile, the above items a) to c) are based on the example of 4-pole coil structure as shown in Figs. 1A, 1C and 2A. In the example of 8-pole coil structure as shown in Figs. 1B and 2B, the above-mentioned 4-pole coil structure is mutually combined and as a result, in the items of b) and c), the electromagnetic field radiation D is more significantly reduced and the electromagnetic field strength r is also more significantly lowered. The direction and range in which the electromagnetic field radiation D and the electromagnetic field strength approach zero increase.

The electromagnetic field radiation D etc. are as described above.

### (Electromagnetic waves)

In this non-contact power feeding apparatus 7, by adopting a multi-pole structure, such as the 4-pole structure or the 8-pole structure, with the reverse north and south magnetic poles, the electromagnetic field radiation D is reduced and the electromagnetic field strength r is also lowered as described above.

The electromagnetic waves radiated to the outside show non-directional or isotropic characteristics in the conventional example of this type (refer to Fig. 3C), while, the electromagnetic waves in the present invention show the specified or limited directional characteristics (refer to Figs. 2A and 2B). In other words, the externally diffused electric field and magnetic field H are reduced and the strength is also lowered.

In this way, the externally radiated electromagnetic waves are reduced. The electromagnetic waves propagated in the vertical (Y) direction and in the lateral (X) direction in a substantially planar manner are drastically reduced in total. In other words, an electric line of force and a magnetic line of force which are caused and spread peripherally are quantitatively reduced and are qualitatively lowered in strength.

The electromagnetic waves are as described above.

### (Operation etc.)

The non-contact power feeding apparatus 7 of preferred embodiments of the present invention is constructed as described above. Operation etc. of the embodiments will be described as follows.
1) In the case of power feeding, a power receiving coil 9 of a power receiving side circuit 5 mounted on the side of a movable body such as a vehicle B is closely located to face a power transmission coil 8 of a power feeding side circuit 4 fixedly disposed on the ground A side through an air gap G, with no contact, to feed power. Power feeding is typically conducted by a stop-type power feeding method (refer to Figs. 5).
2) In the case of power feeding, the power transmission coil 8 of the power feeding side circuit 4 is first energized by a high frequency alternating current, that is, an exciting current from a power source 12. In this manner, a magnetic flux is formed on the power transmission coil 8, wherein a magnetic path of the magnetic flux is formed in the air gap G between the power transmission coil 8 and the power receiving coil 9 (refer to Figs. 1C, 4 and 5).
3) In this manner, the power transmission coil 8 and the power receiving coil 8 are electromagnetically coupled through the air gap G, wherein the magnetic flux goes through and interlinks the power receiving coil 9 to generate the induced electromotive force.
   In the non-contact power feeding apparatus 7, by utilizing the magnetic field H induced in this way, power is fed from the power feeding side circuit 4 to the power receiving side circuit 5 based on the mutual induction effect of electromagnetic induction (refer to Fig. 1C).
4) Meanwhile, a high-frequency alternating current of , for example, 10 kHz to 100 kHz is used in the non-contact power feeding apparatus 7 of this type, wherein a high-frequency magnetic field H of high-density [an alternating magnetic field (H) ] is induced in the air gap G.
   In this case, there is a risk that the electromagnetic waves are strongly radiated to the outside from the air gap G. There is a possibility that the electromagnetic field radiation H and the electromagnetic field strength r are strongly diffused to the outside taking on the non-directional characteristic or the isotropic characteristic (refer to the conventional example of Fig. 3).
5) As opposed to this, a magnetic core 6 is disposed on the outside of an area forming the air gap G, that is, on the outside (e.g., lower surface) of the power transmission coil 8 and on the outside (e.g., upper surface) of the power receiving coil 9. In this manner, the electromagnetic field radiation D in the same (Z) direction is blocked and there is little external radiation of the electromagnetic waves (refer to Figs. 1C, 3B, etc.).
6) However, each side surface (e.g., the vertical surface and the lateral surface) of the air gap G is not provided with the magnetic core 6 etc. and is open to the atmosphere. Accordingly, there is a great possibility that the electromagnetic field radiation D propagates along each side (the direction of X and Y relative to the direction of Z) of the air gap G to be spread in a substantially planar manner. In other words, there is a great possibility that the electromagnetic waves are strongly radiated to the outside (refer to the conventional example of Fig. 3).
7) In the present invention, the power transmission coil 8 and the power receiving coil 9 respectively adopt a multi-pole structure of, for example, a 4-pole structure or an 8-pole structure. The present invention also adopts a structure whereby the direction of an electric current I is set reverse to make the magnetic poles, that is, the north and south poles reverse between each unit coil 8' (9') which is juxtaposed to another to directly come into line (refer to Fig. 1).
8) In this manner, a respectively formed magnetic field H is provided to make the direction of magnetic field h reverse between each unit coil 8' (9') which is juxtaposed to another to directly come into line and of which the north and south poles are reversed. Thus, mutually overlapping areas of the magnetic field H cancel each other out to offset the operation of the magnetic field H in the north and south direction and the magnetic field H is weakened. As a result, the density of magnetic field H formed is drastically lowered.
9) Accordingly, the electromagnetic field radiation D radiated to the outside is significantly reduced and the electromagnetic field strength r is also significantly lowered. These show specified and limited directional characteristics (comparatively refer to Figs. 2A and 2B of the present invention and Fig. 3C of the conventional example of this type).
   In this manner, the electromagnetic waves radiated out of each side surface of the air gap G are significantly reduced in total. The electric line of force and the magnetic line of force which propagates peripherally are quantitatively reduced and the strength is qualitatively lowered.
10) As described above, since the electromagnetic waves radiated to the outside are significantly reduced in total and a risk of generating electromagnetic disturbance is prevented, further expansion of the air gap G is possible.

Namely, expansion of the air gap G is proportional to the increase of exciting reactive power of the power transmission coil 8 and leads to the increase of exciting apparent power, but its adverse effect can be covered by the above item (9).

In other words, even though power increase is caused, the electromagnetic waves radiated to the outside can be drastically reduced. Thus, expansion of the electromagnetic field radiation H diffused to the outside and the increase of the electromagnetic field strength r according to the expansion of air gap G can be surely prevented.

Operation and the like are as described above.

### Explanation of reference numerals

1: Non-contact power feeding apparatus (Conventional example); 2: Power transmission coil (Conventional example); 3: Power receiving coil (Conventional example); 4: Power feeding side circuit; 5: Power receiving side circuit; 6: Magnetic core; 7: Non-contact power feeding apparatus (Present invention); 8: Power transmission coil (Present invention); 8': Unit coil; 9: Power receiving coil (Present invention); 9': Unit coil; 10: Battery; 11: Load; 12: Power source; 13: Choke coil; 14: Capacitor; 15: Capacitor; 16: Motor; 17: Converter; 18: Inverter; 19: Capacitor; A: Ground; B: Vehicle; C: Power feeding stand; D: Electromagnetic field radiation; G: Air gap; H: Magnetic field; I: Direction of electric current; J: Distance; N: North pole; S: South pole; h: Direction of magnetic field; r: Electromagnetic field strength

## Claims

1. A non-contact power feeding apparatus(7) adapted to feed power through an air gap (G), with no contact, from a power transmission coil(8) of a power feeding side circuit(4) to a power receiving coil(9) of a power receiving side circuit(5), which are closely located to face each other, based on a mutual induction effect of electromagnetic induction, **characterized in that** the power transmission coil(8) and the power receiving coil(9) are respectively composed of a planar assembly of a number of unit coils(8')(9'), each unit coil(8')(9') is formed in a spirally wound flat structure and is juxtaposed to another, and the direction of an electric current (I) is set in reverse between each unit coil(8')(9') which is juxtaposed to another to directly come into line.

2. The non-contact power feeding apparatus(7) according to claim 1, wherein power can be fed by a stop-type power feeding method whereby, in the case of power feeding, the power receiving coil(9) is positioned to closely face the stationary power transmission coil(8), and the power transmission coil(8) and the power receiving coil(9) are formed in a vertically paired symmetric structure.

3. The non-contact power feeding apparatus(7) according to claim 1 or 2, wherein one unit coil(8')(9') is composed of paired north and south poles(N)(S) to be taken as a double-pole coil with 2 pole numbers, and the power transmission coil(8) and the power receiving coil(9) are respectively taken as a 4-pole coil structure, an 8-pole coil structure or a multi-pole coil structure when an even number of unit coils(8')(9') is assembled.

4. The non-contact power feeding apparatus(7) according to claim 3, wherein the direction of an electric current (I) is set in reverse to make the north and south magnetic poles(N)(S) reverse between each unit coil(8')(9') which is juxtaposed to another to directly come into line.

5. The non-contact power feeding apparatus(7) according to claim 4, wherein the unit coils(8')(9') which are juxtaposed to another to directly come into line are provided in such a manner that an overlapping area of the respectively formed magnetic field cancels another out to be offset based on the reverse north and south magnetic poles(N)(S) to reduce the externally radiated electromagnetic waves in total.

6. The non-contact power feeding apparatus(7) according to any preceding claim, wherein the power transmission coil(8) and the power receiving coil(9) are respectively provided outside with a magnetic core(6) such as a ferrite core of a flat structure.

7. The non-contact power feeding apparatus(7) according to any preceding claim, wherein the power feeding side circuit(4) such as the power transmission coil(8) is fixedly disposed on the ground(A) side such as a ground surface, a road surface or a floor surface, while the power receiving side circuit(5) such as the power receiving coil(9) is mounted on the side of a vehicle(B) or other movable body.
